# EUROPEAN PATENT SPECIFICATION

(11) **EP 1 087 188 B1**
(45) Date of publication and mention of the grant of the patent: **28.06.2006**
(21) Application number: 00120672.1
(22) Date of filing: 21.09.2000
(51) Int. Cl.: F25B 9/14, F16K 11/085

(54) **Refrigerator with a rotary valve**
Kühler mit Drehventil
Réfrigérateur avec une soupape rotative

(30) Priority: 21.09.1999 JP 26751499
(43) Date of publication of application: 28.03.2001
(73) Proprietor: Air Water Inc., Sapporo-shi, Hokkaido 060-0003 (JP)
(72) Inventor: Kunitani, Shingo, Air Water Inc., Sakai-shi, Osaka 592-8331 (JP)
(74) Representative: Barton, Matthew Thomas

(56) References cited:
- EP-A- 0 862 030
- US-A- 4 372 338
- US-A- 4 926 639
- US-A- 4 986 307
- US-A- 5 901 737
- PATENT ABSTRACTS OF JAPAN vol. 009, no. 070 (M-367), 30 March 1985 (1985-03-30) -& JP 59 200874 A (KASHIWA KISEN SANGYO KK), 14 November 1984 (1984-11-14)

## Description

### BACKGROUND OF THE INVENTION

### Field of the Invention

The present invention relates to a refrigerator incorporating a rotary valve. An example of such a refrigerator is shown in US-A-5901737. Another example of rotary valve is disclosed in JP-A-59200874.

### Description of Related Art

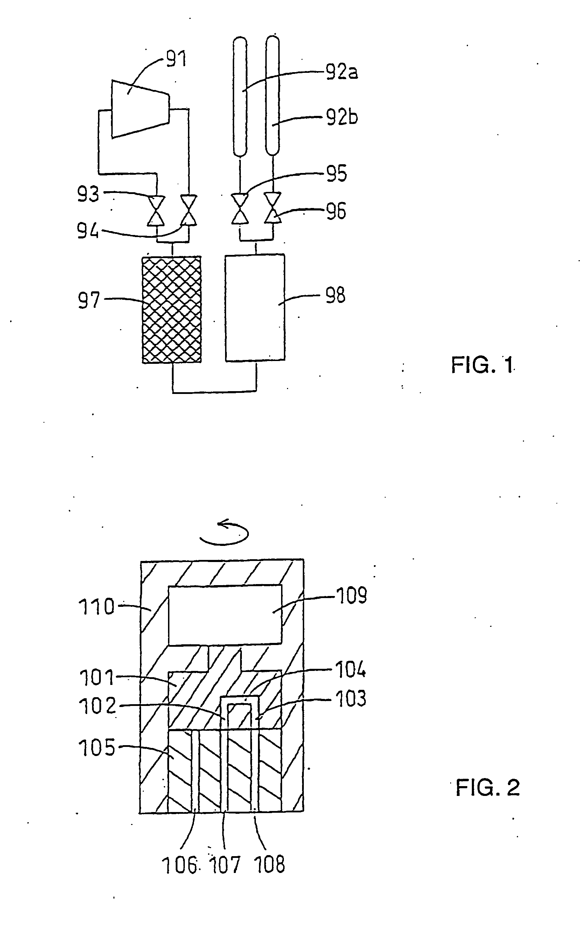

For driving a compact refrigerator typified by a G-M (Gifford-McMahon) refrigerator, a pulse tube refrigerator and the like, a pressure pulsation source is required and, in some cases, a phase controller is required. The pressure pulsation source and the phase controller each have valves for controlling the flow of an operating gas. Referring to Fig. 1, an active buffer pulse tube refrigerator, for example, includes a pressure pulsation source having a compressor 91 and a pair of valves 93, 94, and a phase controller having two buffer tanks 92a, 92b and a pair of valves 95, 96. In Fig. 1, reference numerals 97 and 98 denote a regenerator and a pulse tube, respectively.

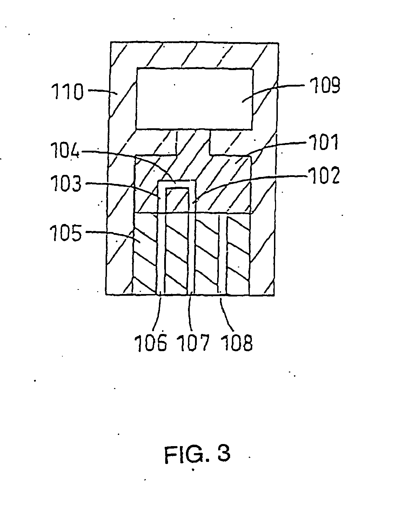

The valves 93 to 96 are each opened and closed in a precisely predefined cycle. The open-close cycle is relatively short, which typically provides pressure pulsation of several hertz to several tens hertz. Therefore, a solenoid valve or a compact flat seal rotary valve as shown in section in Fig. 2 is generally employed for the valves 93 to 96. The flat seal rotary valve includes a rotary element 101 having two.ports 102, 103 (which communicate with each other via a communication path 104), and a stationary element 105 having three ports 106 to 108 and kept in area contact with the rotary element 101. The rotary element 101 is adapted to be rotated with respect to the stationary element 105 by rotation of a motor 109 so that the ports 102, 103 are selectively connected to the ports 106 to 108 (the port connection is switched between a position where the ports 107, 108 of the stationary element 105 communicate with each other as shown in Fig. 2 and a position where the ports 106, 107 of the stationary element 105 communicate with each other as shown in Fig. 3). Thus, the flat seal rotary valve shown in Fig. 2 is capable of switching the flow path of the operating gas in two ways. Therefore, it is merely necessary to provide such rotary valves one for each of the pressure pulsation source and the phase controller. In Figs. 2 and 3, reference numeral 110 denotes a housing which accommodates the rotary element 101 in a rotatable manner.

For realization of a larger-scale and higher-efficiency refrigerator, a larger volume of the operating gas, a higher operating frequency and a complicated phase controller are required. In consideration of the marketability of such a refrigerator, it is desirable to employ a selector valve having a compact size and a long service life for the refrigerator and to satisfy the aforesaid requirements. However, conventional selector valves typified by the solenoid valve and the flat seal rotary valve shown in Fig. 2 cannot satisfy the aforesaid requirements, making it impossible to realize a larger-scale and higher-efficiency refrigerator.

More specifically, where a solenoid valve is employed as the selector valve, the valve tends to have a complicated construction and an increased size in an attempt to increase the volume of the operating gas, so that high speed operation of the valve is difficult. If the valve is frequently operated at a higher speed, the service life of the valve will drastically be reduced. Where a phase controller is incorporated in the refrigerator, the number of valves should be increas ed for the complicated construction of the phase controller, so that the overall size of the refrigerator is increased.

Where a flat seal rotary valve is employed as the selector valve, it is necessary to increase the diameters of the rotary element 101 and the stationary element 105 in an attempt to increase the port diameter for passage of a larger volume of the operating gas or to increase the number of ports for the complicated construction of the phase controller. Therefore, the contact areas of the rotary element 101 and the stationary element 105 are increased. Since the pressure exerted on the rotary element 101 is increased correspondingly to the increase in the contact area of the rotary element 101 and the stationary element 105, a motor capable of providing a greater torque should be employed as the motor 109. This increases the overall size of the valve. For this reason, only a smaller-scale refrigerator, having a cryogenic capacity on the order of several watts, has hitherto been developed.

In view of the foregoing, it is an object of the present invention to provide a larger-scale, greater-capacity and higher-efficiency refrigerator with the use of a valve having a smaller size and an extended service and to provide a rotary valve for use therein .

### SUMMARY OF THE INVENTION

In accordance with the present invention to achieve the aforesaid object, there is provided a refrigerator incorporating a rotary valve for controlling the flow of an operating gas, the rotary valve comprising a rotary element rotatable about an axis thereof and having a circular cross-section perpendicular to the axis, and a hollow housing accommodating the rotary element in a rotatable manner, the rotary element having two separate recesses provided in an outer peripheral portion thereof, on opposite sides thereof, the housing having on one side thereof three ports provided at axially spaced positions in a peripheral wall thereof in association with the recesses of the rotary element, there being a first pair of said three ports which includes a central one of the three ports adapted to be brought into communication with a first said recess and a second pair of said three ports which also includes the central one of the three ports adapted to be brought into communication with the second said recess, the rotary valve being operative to be switched between a first position where the first recess of the rotary element is aligned with the first pair of ports of the housing for communication therebetween, and the second recess is displaced in non-alignment with the second pair of ports for non-communication therebetween, and a second position where the second recess of the rotary element is aligned with the second pair of ports of the housing for communication therebetween, and the first recess is displaced in non-alignment with the first pair of ports for non-communication therebetween, the rotary element being switchable between the first position and the second position by rotation.

Preferably said recesses of the rotary element are provided in an outer peripheral portion of the rotary element and are axially independently provided, each being formed in a different location along the axis of the rotary element.

Conveniently the refrigerator is a pulse tube refrigerator and the pulse tube refrigerator is a refrigerator having a buffer tank.

A preferred refrigerator according to the present invention employs a rotary valve which has a plurality of recesses provided in the outer peripheral portion of the rotary element (rotatable about the axis thereof and having the circular cross-section perpendicular to the axis), and a plurality of ports provided in the peripheral wall of the housing (accommodating the rotary element in a rotatable manner).

Since the plurality of recesses of the rotary valve incorporated in the refrigerator are axially independently provided, an increase in the diameter of the rotary element is minimised even if the diameter and number of the ports are increased This allows the rotary valve to have a reduced size and an extended service life. As a result, the diameter and number of the ports can more easily be increased in the rotary valve than in the conventional solenoid valve and flat seal rotary valve, so that the refrigerator is allowed to have a larger scale, a greater capacity and a higher efficiency. For example, the refrigerator can be embodied as a larger-scale refrigerator having a wattage of not smaller than several hundreds watts. Of course, the refrigerator may be embodiment as a small-scale refrigerator having a wattage of several watts as in the prior art. The refrigerator maybe of pulse tube type, G-M (Gifford-McMahon) type, or Solvay type, but are not limited thereto. The refrigerator may be embodied as any type of refrigerator, as long as the refrigerator is designed so that flow paths of an operating gas are switched by switching a valve. In the present invention, the rotary element has a circular cross-section perpendicular (or normal) to the rotary axis of the element. In other words, the horizontal cross-section of the rotary element is circular when the rotary element is placed vertically upright and the vertical cross-section of the rotary element is circular when the same rotary element is laid horizontally.

The foregoing and other objects, features and effects of the present invention will become more apparent from the following description given by way of example with reference to the attached drawings.

### BRIEF DESCRIPTION OF THE DRAWINGS

FIGURE 1 is a diagram illustrating a conventional pulse tube refrigerator,
FIGURE 2 is a diagram illustrating a conventional flat seal rotary valve,
FIGURE 3 is a diagram showing the operation of the flat seal rotary valve of Figure 2,
FIGURE 4 is a diagram illustrating a refrigerator in accordance with one embodiment of the present invention,
FIGURE 5 is a perspective view illustrating a rotary element employed for a rotary valve,
FIGURES 6 and 7 are diagrams showing the operation of the rotary valve employing the rotary element of Figure 5.

### DETAILED DESCRIPTION OF THE INVENTION

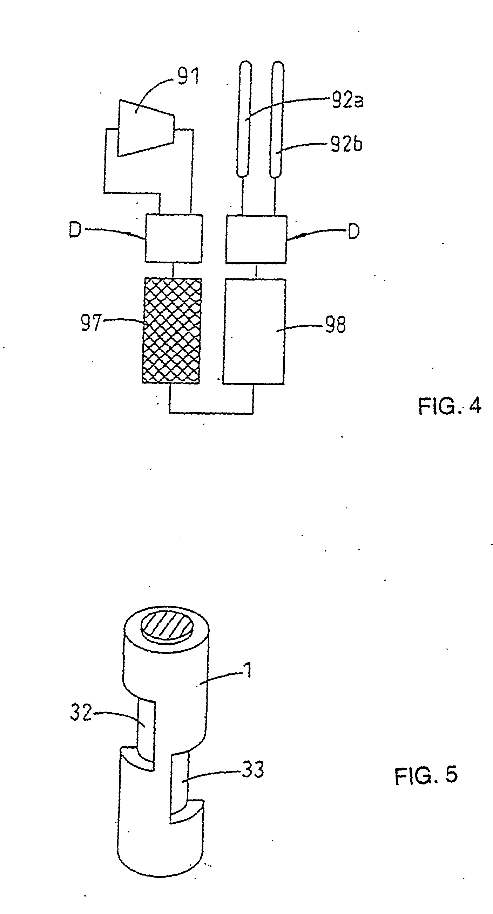

Figure 4 illustrates a pulse tube refrigerator in accordance with the present invention. The pulse tube refrigerator according to this embodiment has substantially the same construction as the pulse tube refrigerator shown in Figure 1, except that rotary valves D as shown in Figures 5, 6 and 7 are respectively employed instead of the pair of valves 93, 94 and the pair of valves 95, 96. Since the other components of the pulse tube refrigerator of Figure 4 are the same as those of the pulse tube refrigerator of Figure 1, like components are denoted by like reference numerals.

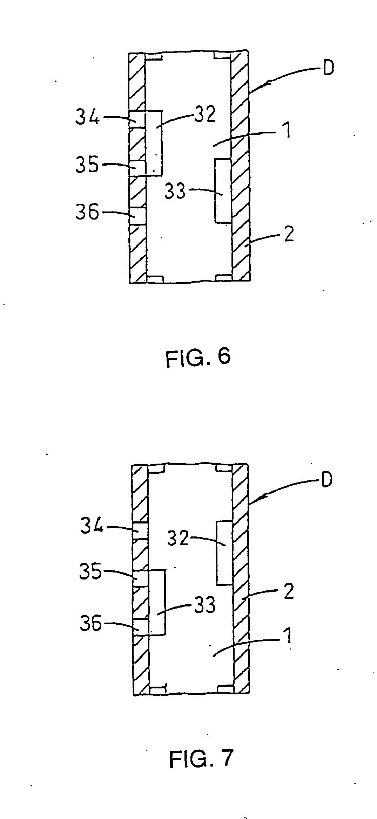

In the rotary valves D the rotary element 1 has recesses 32 and 33 respectively formed in an outer peripheral portion thereof on opposite sides thereof (on the left-hand side and the right-hand side thereof in Figure 5). The housing 2 has three ports 34 to 36 formed in a circumferential wall thereof on one side thereof (on the left-hand side in Figure 6), the ports 34, 35 being adapted to be brought into communication with the recess 32, the ports 35, 36 being adapted to be brought into communication with the recess 33. When the rotary element 1 is rotated into the position as shown in Figure 6, the ports 34, 35 communicate with the recess 32 to permit an operating gas to flow therethrough. At this time, the ports 35, 36 do not communicate with the recess 33, so that the operating gas is prevented from flowing therethrough. When the rotary element 1 is rotated from this position into the position as shown in Figure 7, the ports 35, 36 are brought into communication with the recess 33 to permit the operating gas to flow therethrough. At this time, the ports 34, 35 do not communicate with the recess 32, so that the operating gas is prevented from flowing therethrough. At this time, the ports 34, 35 do not communicate with the recess 32, so that the operating gas is prevented from flowing therethrough. Although two rotary valves D are employed in this embodiment, the arrangement of the rotary valves is not limited thereto. For example, only one rotary valve D may be employed instead of the pair of valves 93, 94 or the pair of valves 95, 96.

The pulse tube refrigerator to be used in the embodiments described above may be either a closed system or an open system. Further, the pulse tube refrigerator may have or may not have a cold accumulating material. The pulse tube refrigerator may be of indirect cooling type or of direct cooling type.

As described above, the preferred refrigerator according to the present invention employs the rotary valve which has the plurality of recesses provided in the outer peripheral portion of the rotary element (rotatable about the axis thereof and having the circular cross-section perpendicular to the axis), and the plurality of ports provided in the peripheral wall of the housing (accommodating the rotary element in a rotatable manner). Since the plurality of recess of the rotary valve for the preferred refrigerator are axially independently provided, an increase in the diameter of the rotary element is minimised even if the diameter and number of the ports are increased. This allows the rotary valve to have a reduced size and an extended service life. As a result, the diameter and number of the ports can be easily increased in the rotary valve as compared to a conventional solenoid valve and flat seal rotary valve, so that the first refrigerator can have a larger-scale, a greater capacity and a higher efficiency. For example, a refrigerator in accordance with the invention can be embodied as a larger scale refrigerator having a wattage of not smaller than several hundreds watts. Of course, a refrigerator in accordance with the invention may be embodied as a smaller-scale refrigerator having a wattage of several watts as in the prior art.

While the present invention has been described in detail by way of the embodiments thereof, it should be understood that the foregoing disclosure is merely illustrative of the technical principles of the present invention but not limitative of the same. The scope of the present invention is to be limited only by the appended Claims.

## Claims

1. A refrigerator incorporating a rotary valve for controlling the flow of an operating gas, the rotary valve comprising a rotary element (1) rotatable about an axis thereof and having a circular cross-section perpendicular to the axis, and a hollow housing (2) accommodating the rotary element in a rotatable manner, the rotary element having two separate recesses (32, 33) provided in an outer peripheral portion thereof, on opposite sides thereof, the housing having on one side thereof three ports (34-36) provided at axially spaced positions in a peripheral wall thereof in association with the recesses of the rotary element, there being a first pair of said three ports (34, 35) which includes a central one (35) of the three ports adapted to be brought into communication with a first said recess (32) and a second pair of said three ports (35, 36) which also includes the central one (35) of the three ports adapted to be brought into communication with the second said recess (33), the rotary valve being operative to be switched between a first position where the first recess (32) of the rotary element is aligned with the first pair of ports (34, 35) of the housing for communication therebetween, and the second (33) recess is displaced in non-alignment with the second pair of ports (35, 36) for non-communication therebetween, and a second position where the second recess (33) of the rotary element is aligned with the second pair of ports (35, 36) of the housing for communication therebetween, and the first recess (32) is displaced in non-alignment with the first pair of ports (34, 35) for non-communication therebetween, the rotary element (1) being switchable between the first position and the second position by rotation.

2. A refrigerator as set forth in Claim 1, wherein said recesses (32, 33) of the rotary element are provided in an outer peripheral portion of the rotary element (1) and are axially independently provided, each being formed in a different location along the axis of the rotary element.

3. A refrigerator as set forth in Claim 1 or 2 wherein refrigerator is a pulse tube refrigerator and the pulse tube refrigerator is a refrigerator having a buffer tank (92a or 92b).

## Patentansprüche

1. Kühler, der ein Drehventil zur Steuerung des Durchflusses eines Betriebsgases enthält, wobei das Drehventil ein Drehelement (1), das um eine Achse desselben drehbar ist und einen kreisförmigen Querschnitt senkrecht zu der Achse aufweist, und ein hohles Gehäuse (2), das das Drehelement in einer drehbaren Weise aufnimmt, umfaßt, wobei das Drehelement zwei getrennte Vertiefungen (32, 33) aufweist, die in einem Außenumfangsabschnitt desselben, auf gegenüberliegenden Seiten desselben, vorgesehen sind, wobei das Gehäuse auf einer Seite desselben drei Öffnungen (34-36) aufweist, die in axial beabstandeten Positionen in einer Umfangswand desselben in Verbindung mit den Vertiefungen des Drehelements vorgesehen sind, wobei es ein erstes Paar von besagten drei Öffnungen (34, 35) gibt, das eine zentrale (35) der drei Öffnungen einschließt, angepaßt, um in Verbindung mit der ersten besagten Vertiefung (32) gebracht zu werden, und ein zweites Paar von besagten drei Öffnungen (35, 36), das ebenfalls die zentrale (35) der drei Öffnungen einschließt, angepaßt, um in Verbindung mit der zweiten besagten Vertiefung (33) gebracht zu werden, wobei das Drehventil so betrieben werden kann, daß es zwischen der ersten Position, in der die erste Ausnehmung (32) des Drehelements mit dem ersten Paar von Öffnungen (34, 35) des Gehäuses zur Verbindung dazwischen fluchtet und die zweite (33) Vertiefung in Nicht-Flucht mit dem zweiten Paar von Öffnungen (35, 36) für Nicht-Verbindung dazwischen versetzt ist, und einer zweiten Position, in der die zweite Vertiefung (33) des Drehelements mit dem zweiten Paar von Öffnungen (35, 36) des Gehäuses für Verbindung dazwischen fluchtet und die erste Vertiefung (32) in Nicht-Flucht mit dem ersten Paar von Öffnungen (34, 35) für Nicht-Verbindung dazwischen versetzt ist, umgeschaltet werden kann, wobei das Drehelement (1) zwischen der ersten Position und der zweiten Position durch Drehung umgeschaltet werden kann.

2. Kühler nach Anspruch 1, **dadurch gekennzeichnet, daß** besagte Vertiefungen (32, 33) des Drehelements in einem Außenumfangsabschnitt des Drehelements (1) vorgesehen sind und axial unabhängig vorgesehen sind, wobei jede an einer unterschiedlichen Stelle entlang der Achse des Drehelements ausgebildet ist.

3. Kühler nach Anspruch 1 oder 2, **dadurch gekennzeichnet, daß** der Kühler ein Pulsrohrkühler ist und der Pulsrohrkühler ein Kühler mit einem Puffertank (92a oder 92b) ist.

## Revendications

1. Réfrigérateur incorporant une soupape rotative permettant de commander le débit d'un gaz d'exploitation, la soupape rotative comprenant un élément rotatif (1) pouvant tourner autour d'un axe de celle-ci et ayant une section circulaire perpendiculaire à l'axe, et un boîtier creux (2) logeant l'élément rotatif de manière qu'il puisse tourner, l'élément rotatif ayant deux évidements séparés (32, 33) prévus dans une partie périphérique externe de celui-ci, sur des côtés opposés de celui-ci, le boîtier ayant sur un de ses côtés trois ports (34-36) prévus en des positions espacées axialement sur une paroi périphérique de celui-ci en association avec les évidements de l'élément rotatif, une première paire desdits trois ports (34, 35) étant prévue, qui inclut un port central (35) des trois ports conçu pour être mis en communication avec ledit premier évidement (32) et une seconde paire desdits trois ports (35, 36) qui inclut aussi le port central (35) des trois ports conçu pour être mis en communication avec ledit second évidement (33), la soupape rotative pouvant être commutée entre une première position dans laquelle le premier évidement (32) de l'élément rotatif est aligné avec la première paire de ports (34, 35) du boîtier pour qu'il y ait une communication entre eux, et le second évidement (33) est déplacé de façon à ne pas être aligné avec la seconde paire de ports (35, 36) pour qu'il n'y ait aucune communication entre eux, et une seconde position dans laquelle le second évidement (33) de l'élément rotatif est aligné avec la seconde paire de ports (35, 36) du boîtier pour qu'il y ait une communication entre eux, et le premier évidement (32) est déplacé de façon à ne pas être aligné avec la première paire de ports (34, 35) pour qu'il n'y ait pas de communication entre eux, l'élément rotatif (1) étant commutable entre la première position et la seconde position par rotation.

2. Réfrigérateur selon la revendication 1, dans lequel lesdits évidements (32, 33) de l'élément rotatif sont prévus dans une partie périphérique extérieure de l'élément rotatif (1) et sont fournis de façon indépendante et axiale, chacun étant formé dans un endroit différent le long de l'axe de l'élément rotatif.

3. Réfrigérateur selon la revendication 1 ou 2, dans lequel le réfrigérateur est un réfrigérateur à tube à pulsation et le réfrigérateur à tube à pulsation est un réfrigérateur ayant un réservoir tampon (92a ou 92b).
